(19) Europäisches Patentamt
European Patent Office
Office européen des brevets

(11) Publication number: 0 030 668 A1

(12) EUROPEAN PATENT APPLICATION

(21) Application number: 80107479.0

(22) Date of filing: 29.11.80

(51) Int. Cl.3: C 08 G 59/50
C 08 G 59/54, C 08 L 63/00
C 08 J 9/10

(30) Priority: 03.12.79 US 99358

(43) Date of publication of application: 24.06.81 Bulletin 81/25

(84) Designated Contracting States: DE GB NL

(71) Applicant: The B.F. GOODRICH Company
Dept. 0015 WHB-6 500 South Main Street
Akron, Ohio 44318(US)

(72) Inventor: Murphy, Walter Thomas
1091 Taft Avenue
Cuyahoga Falls Ohio 44223(US)

(74) Representative: von Kreisler, Alek et al,
Deichmannhaus am Hauptbahnhof
D-5000 Köln 1(DE)

(54) **Foamed amine terminated reactive liquid polymer/epoxy systems.**

(57) Foamed composition of matter which is a reaction product of an amine-terminated reactive liquid polymer and an epoxy resin containing cells formed by thermal decomposition of an organic chemical blowing agent.

EP 0 030 668 A1

Croydon Printing Company Ltd.

# FOAMED AMINE TERMINATED REACTIVE LIQUID POLYMER/EPOXY SYSTEMS

## BACKGROUND OF THE INVENTION

Reactive liquid polymers are well known materials which have not been foamed in the past for the reason that they do not cure by themselves and, therefore, cannot be made into final rigid products. These liquid polymers are useful as components of elastic vulcanizates, as polymeric curing agents, tougheners, and flexibilizers for epoxy resins, in paints and coatings, in sealants and adhesives. Epoxy resins are also well known. Cured epoxy resins are hard, rigid materials which have low impact and low elongation characteristics. Their principal commercial use is in surface coatings. Unlike the reactive liquid polymers, epoxy resins have been foamed in the past with the aid of various blowing agents. For instance, the report by Byron A. Hunter entitled "Chemical Blowing Agents: Chemistry and Decomposition Mechanisms" discloses on p. 27 that oxy-bis (benzenesulfonyl hydrazide) has been employed in the expansion of PVC plastisols, in epoxy and phenolic resins, in expanded rubbers and in rubber resin blends. Part of this report is reproduced on pp. 19-25 in Rubber Age, for February 1976.

Blends of reactive liquid polymers and epoxy resins are also known. Such blends have improved flexibility which enables them to be formed into articles varying from soft and rubbery to rigid yet flexible. Their primary use is in shoe soles, flexible molds, sealants, glass fiber reinforced components, etc.

It would, therefore, be desirable to foam blends of amine terminated liquid polymers with epoxy resins in order to produce cured products with vastly improved flexibility.

Of all the known reactive liquid polymers, it was discovered that only amine terminated liquid polymers were suitable for blending with epoxy resins and subsequent

foaming. Carboxyl terminated liquid polymers were found to be unsuitable because gelation thereof with epoxy resins was too slow although they are reactive with epoxy resins; hydroxyl terminated liquid polymers were not suitable for the reason that gelation was too slow; and vinyl terminated liquid polymers were unsuitable for the reason that they are not reactive with epoxy resins.

Foaming blends of the amine terminated polymers with epoxy resins was undertaken by initially applying the simplest techniques and then through an evolutionary process, progressing to more complicated and more sophisticated approaches. Initially, aeration by whipping the blends was tried, but unsuccessfully. Density of the resulting cured products was about 40 $lbs/ft^3$ which is not a great improvement over density of 62.4 $lbs/ft^3$ of a solid or cured blend of amine terminated liquid polymer and an epoxy resin. The use of solvents, such as methylene chloride, was then tried. This also proved unsuccessful since the density of the resulting cured products was also about 40 $lb/ft^3$. It appeared that this system did not trap the bubbles but allowed them to diffuse. The use of low boiling freons was also a failure for the same reason; diffusion of gas through the system. Inorganic chemical blowing agents, i.e., solid materials which decompose at different temperatures and release a gas, were also tried but proved unsuitable. Such materials included ammonium carbonate, sodium carbonate, sodium bicarbonate, etc. Foams prepared with inorganic chemical blowing agents looked good initially but collapsed on aging, indicating diffusion.

The next class of blowing agents that were tested were the organic chemical blowing agents. The first agent tried in this class was p,p'-oxybis(benzenesulfonyl hydrazide), which decomposes at about 130 to 160°C. Efficiency of this agent was too low with the result that foaming was poor. Furthermore, this agent produced some decomposition products which were insoluble

in the system and precipitated out. Presence of the precipitate adversely affected physical properties of the resulting cured products. Other agents in this class that were tried but were found to be unsuitable were diphenylsulfone-3,3'-disulfonyl hydrazide with a decomposition temperature of about 148°C, and others that decomposed at higher temperatures.

As the work proceeded with the organic chemical blowing agents, benzenesulfonyl hydrazide and others were tried and were found to perform satisfactorily. It is along this line that the research investigation proceeded.

## SUMMARY OF THE INVENTION

This invention generally relates to a foamed composition of matter comprising a reaction product of an amine-terminated liquid polymer and an epoxy resin containing cells which are formed by thermal decomposition of an organic chemical blowing agent. This agent is selected from nitrogen gas releasing blowing agents having a decomposition temperature of about 80 to 120°C. Also included in the class of suitable blowing agents are those which have decomposition temperatures outside of the range defined here but which are used in conjunction with activators and/or retarders to bring the decomposition temperature within the range of about 80 to 120°C. Foamed blends of amine-terminated liquid polymers with epoxy resins result in cured products with vastly improved flexibility.

More specifically, this invention relates to cellular composition of matter comprising a reaction product of at least one epoxy resin and at least one amine-terminated reactive liquid polymer, the cellular structure having been formed by the presence of a sufficient amount of at least one organic blowing agent which thermally decomposes or can be made to thermally decompose at a temperature of about 80 to 120°C to release nitrogen gas.

## DETAILED DESCRIPTION

By virtue of blending amine-terminated liquid polymers with epoxy resins and foaming such blends with the aid of a blowing agent, physical properties of the cured cellular products can be varied from soft elastomers to rigid yet flexible plastics. Principal utility for products of this invention are in the manufacture of energy dampening or absorbing materials for gym mats, crash pads, helmet liners, etc. Products of this invention, unlike polyurethane foams, are not sensitive to moisture, do not have isocyanate toxicity problems, and have better hydrolytic stability.

Based on the combined weight of amine liquid polymer and epoxy resin used, amount of the blowing agent can vary from about 0.5 to 20 parts by weight, preferably from about 2 to 10 parts. With respect to the relative ratio of the liquid polymer to epoxy resin, it is recommended that, on the basis of 100 parts by weight of the epoxy resin, amount of liquid polymer can vary from about 2 to about 500 parts by weight, preferably from about 5 to about 400 parts. These ranges cover foamed compositions of matter wherein properties of epoxy resin are improved by the use of relatively large amounts of liquid polymer to impart flexibility, and the use of relatively small amounts of liquid polymer to impart high impact resistance and hardness. Although it may appear to be contradictory, it has been found that addition of a liquid polymer in an amount on the order of 5% to an epoxy resin will enhance hardness of the resulting articles.

Foaming of the amine-terminated liquid polymer/ epoxy resin systems is accomplished by admixing an organic chemical blowing agent therewith which decomposes at a temperature of about 80 to 120°C to form a cellular structure. These blowing agents are organic nitrogen compounds which are stable at normal temperatures but undergo controllable gas evolution at reasonably defined decomposition temperatures. Since nitrogen is an inert,

odorless, non-toxic gas, nitrogen-producing organic substances are preferred as blowing agents. Its permeability through rubber-type material is also very low compared to such gases as carbon dioxide, hydrogen, oxygen and ammonia.

Suitable blowing agents are selected from sulfonyl hydrazides, azo compounds and nitroso compounds which thermally decompose to release nitrogen gas at a temperature of about 80 to 120°C. Preferred are blowing agents selected from hydrazides of organic sulfonic acids, specifically benzene sulfonic dicarboxylic acids such as benzenesulfonyl hydrazide, which decomposes at 95-105°C and p-toluenesulfonyl hydrazide, which decomposes at 100-110°C; azo compounds of aminobenzene, cyclohexylnitrile and aliphatic nitriles and amides containing 1 to 10 carbon atoms in the aliphatic chain, such as azo-bis-isobutyronitrile, which decomposes at 95-120°C, diazoaminobenzene, which decomposes at 95-97°C, and azocyclohexylnitrile, which decomposes at 114°C; and nitroso compounds of dicarboxylic acids, specifically, benzene dicarboxylic acid amides such as N,N'-dimethyl-N,N'-dinitrosoterephthalamide, which decomposes at 80-100°C. Most preferred are the sulfonyl hydrazides, as defined above.

Also suitable for foaming systems of amine terminated liquid polymers and epoxy resins are those nitrogen gas releasing organic chemical blowing agents which normally decompose outside of the desired range of 80 to 120°C but which can be made to decompose in this temperature range by the use of activators or retarders in a known manner. For instance, N,N'-dinitroso-N,N'-dimethylterephthalamide has a decomposition temperature of 80 to 100°C which can be lowered by the use of certain amine activators. Likewise, azodicarbonamide decomposes at about 195 to 220°C but can be made to decompose at lower temperatures by hydroxy and many other activating compounds.

Since an ideal blowing agent has stringent requirements, and it appears safe to say that a completely ideal blowing agent is impossible to find for a particular system, selection of a suitable blowing agent, therefore, involves a compromise to some degree. For instance, a certain blowing agent might be reasonably ideal in every respect except toxicity and staining. Such an agent might be used in spite of its toxicity and staining properties in applications where such properties can be tolerated.

Now to mention some of the more important properties of an ideal blowing agent. It must release gases over a short, finite period of time and the gas must be released at a controlled but reasonably rapid rate. The gases should not be corrosive, toxic or noxious. The agent must be stable in storage, must not create a high exotherm on decomposition, should not affect rate of cure, and should function equally well in a closed mold. Selection of a suitable blowing agent for foaming systems of amine-terminated liquid polymers and epoxy resins are to be made pursuant to criteria stated above with exceptions being made for particular applications capable of tolerating the anticipated adverse effects.

Suitable blowing agents for purposes described herein, and their preparation, are well known and well documented in the prior art. For instance, U.S. patent 2,626,933 sets forth numerous blowing agents of the sulfonyl hydrazide class.

Amine-terminated liquid polymers and epoxy resins referred to herein, as well as preparation thereof, are also well known. These materials are nevertheless described in detail below in order to generally indicate extent of their definition and applicability as suitable candidates for cellular or foamed compositions of matter.

The amine-terminated liquid polymers suitable for use in this invention have the formula

$$Y-\overset{O}{\overset{\|}{C}}\!-\!\left(B\right)\!-\!\overset{O}{\overset{\|}{C}}-Y$$

wherein Y is a univalent radical obtained by removing hydrogen from an amine group of an aliphatic, alicyclic, heterocyclic or aromatic amine containing at least two primary and/or secondary amine groups, and B is a polymeric backbone comprising carbon-carbon linkages. Generally, the carbon-carbon linkages comprise at least about 90% by weight of total polymeric backbone weight, more preferably at least about 95% by weight of total polymeric backbone weight. The amine-terminated polymers contain an average of about 1.7 to about 3 primary and/or secondary amine groups per molecule, more preferably an average from about 1.7 to about 2.3 primary and/or secondary amine groups per molecule. The amine-terminated polymers should have Brookfield viscosities from about 500 cps to about 2,500,000 cps, more preferably from about 500 cps to about 500,000 cps, measured by using a Brookfield RVT viscometer at 27°C.

The amine-terminated liquid polymers can be prepared easily by reacting a carboxyl-terminated or ester-terminated liquid polymer having a carbon-carbon backbone with at least one aliphatic, alicyclic or heterocyclic amine containing at least two primary and/or secondary amine groups. Amine-terminated liquid polymers can also be prepared easily by reacting an acid chloride-terminated liquid polymer having a carbon-carbon backbone with at least one aliphatic, alicyclic, heterocyclic or aromatic amine containing at least two primary and/or secondary amine groups.

The carboxyl-terminated liquid polymers, mentioned in the preceding paragraph, should have Brookfield viscosity of about 500 cps to about 250,000 cps, and polymeric backbones comprising carbon-carbon linkages. The carboxyl functional groups are located at least at the ends of a polymer molecule, but there may also be additional group(s) located pendant to a polymer backbone.

The average number of total carboxyl groups typically is from about 1.7 to about 3 groups per molecule, more preferably from about 1.7 to 2.3 groups per molecule.

Carboxyl-terminated liquid polymers having carbon-carbon backbone linkages may contain polymerized units of at least one vinylidene monomer having at least one terminal $CH_2=C<$ group and selected from the group consisting of (a) monoolefins containing 2 to 14 carbon atoms, more preferably 2 to 8 carbon atoms, such as ethylene, propylene, isobutylene, 1-butene, 1-pentene, 1-hexene, 1-dodecene, and the like; (b) dienes containing 4 to 10 carbon atoms, more preferably 4 to 8 carbon atoms, such as butadiene, isoprene, 2-isopropyl-1,3-butadiene, chloroprene, and the like; (c) vinyl and allyl esters of carboxylic acids containing 2 to 8 carbon atoms such as vinyl acetate, vinyl propionate, allyl acetate, and the like; (d) vinyl and allyl ethers of alkyl radicals containing 1 to 8 carbon atoms such as vinyl methyl ether, allyl methyl ether, and the like; and (e) acrylic acids and acrylates having the formula

$$CH_2=\overset{R}{\overset{|}{C}}-\overset{O}{\overset{\|}{C}}-O-R^1$$

wherein R is hydrogen or an alkyl radical containing 1 to 3 carbon atoms and $R^1$ is hydrogen or an alkyl radical containing 1 to 18 carbon atoms, more preferably 1 to 8 carbon atoms, or an alkoxyalkyl, alkylthioalkyl, or cyanoalkyl radical containing 2 to 12 carbon atoms, more preferably 2 to 8 carbon atoms. Even more preferably $R^1$ is hydrogen or an alkyl radical containing 1 to 8 carbon atoms. Examples of suitable acrylates include ethyl acrylate, butyl acrylate, hexyl acrylate, 2-ethylhexyl acrylate, dodecyl acrylate, octadecyl acrylate, methoxyethyl acrylate, butoxyethyl acrylate, hexylthioethyl acrylate, β-cyanoethyl acrylate, cyanooctyl acrylate, methyl methacrylate, ethyl methacrylate, octyl methacrylate, and the like. Often, two or more types of these

polymerized monomeric units are contained in the polymeric backbone.

More preferred liquid polymers contain polymerized units of at least one vinylidene monomer having at least one terminal $CH_2=C<$ group and are selected from the group consisting of monoolefins as defined in (a) above, dienes as defined in (b) above, and acrylic acids and acrylates as defined in (e) above.

The vinylidene monomers described above can be polymerized readily with from 0% to about 50% by weight, more preferably from 0% to about 35% by weight, of at least one comonomer selected from the group consisting of (f) vinyl aromatics having the formula

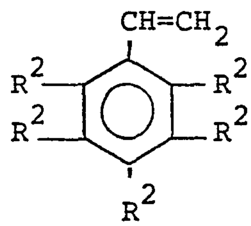

wherein $R^2$ is hydrogen, halogen or an alkyl radical containing from 1 to 4 carbon atoms, such as styrene, α-methyl styrene, chlorostyrene, vinyl toluene, and the like; (g) vinyl nitriles having the formula

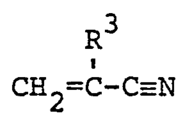

wherein $R^3$ is hydrogen or an alkyl radical containing 1 to 3 carbon atoms, such as acrylonitrile, methacrylonitrile, and the like; (h) vinyl halides such as vinyl bromide, vinyl chloride, and the like; (i) divinyls and diacrylates such as divinyl benzene, divinyl ether, diethylene glycol diacrylate, and the like; (j) amides of α,β-olefinically unsaturated carboxylic acids containing 2 to 8 carbon atoms such as acrylamide, and the like; and (k) allyl alcohol, and the like. Liquid polymer compositions comprising polymerized units of a major amount of at least one vinylidene monomer listed in (a) to (e) with

a minor amount of at least one comonomer listed in (f) to (k) are within the scope of this invention.

More preferred comonomers may be selected from the group consisting of vinyl aromatics as defined in (f) above, and vinyl nitriles as defined in (g) above. Excellent results can be obtained using styrene and acrylonitrile as comonomers.

Examples of useful liquid polymeric backbones comprising carbon-carbon linkages include polyethylene, polyisobutylene, polyisoprene, polybutadiene, poly(vinyl ethyl ether), poly(ethylacrylate) and poly(butylacrylate) as well as copolymers of butadiene and acrylonitrile; butadiene and styrene; vinyl acetate and isoprene; vinyl acetate and chloroprene; vinyl ethyl ether and diallyl ether; vinyl ethyl ether and α-methyl styrene; vinyl ethyl ether and vinyl bromide; methyl acrylate and butadiene; methyl acrylate and ethyl acrylate; methyl acrylate and butyl acrylate; methyl acrylate and 2-ethylhexyl acrylate; ethyl acrylate and ethylene; ethyl acrylate and isobutylene; ethyl acrylate and isoprene; ethyl acrylate and butadiene; ethyl acrylate and vinyl acetate; ethyl acrylate and styrene; ethyl acrylate and chlorostyrene; ethyl acrylate, styrene and butadiene; ethyl acrylate and n-butyl acrylate; ethyl acrylate, n-butyl acrylate and 2-ethylhexyl acrylate; ethyl acrylate and 2-ethylhexyl acrylate; ethyl acrylate and vinyl bromide; ethyl acrylate and acrylic acid; ethyl acrylate and acrylamide; ethyl acrylate and allyl alcohol; butyl acrylate, styrene and isoprene; butyl acrylate and styrene; butyl acrylate and acrylonitrile; butyl acrylate and vinyl chloride, and the like.

Liquid carboxyl-terminated polymers may be prepared by free-radical polymerization using carboxyl-containing initiators and/or modifiers as disclosed in U.S. Pat. No. 3,285,949 and German Pat. No. 1,150,205 and by solution polymerization using lithium metal or organo-metallic compounds and posttreating the polymers

to form carboxyl groups as disclosed in U.S. Pat. Nos. 3,135,716 and 3,431,235. The polymers can also be prepared by reacting liquid polymers having other than terminal carboxyl groups with compounds so as to yield carboxyl groups. For example, liquid carboxyl-terminated polymers can be prepared from liquid hydroxyl-terminated polymers by reaction with dicarboxyl compounds or anhydrides. Liquid halogen-terminated polymers can be reacted with unsaturated anhydrides in the presence of Lewis acids to yield carboxyl groups. Thus, it is seen that the method of preparing the liquid carboxyl-terminated polymer is not critical to the invention. The essential features of the polymer are that it have at least terminal carboxyl groups and a polymeric backbone of carbon-carbon linkages.

Examples of preferred liquid carboxyl-terminated polymers include carboxyl-terminated polyethylene, carboxyl-terminated polyisobutylene, carboxyl-terminated polybutadiene, carboxyl-terminated polyisoprene, carboxyl-terminated poly(ethylacrylate), as well as carboxyl-terminated copolymers of butadiene and acrylonitrile and of butadiene and styrene. Carboxyl-terminated copolymers of butadiene with acrylonitrile or styrene were found to be especially useful. These polymers may contain from about 50% to about 99.6% by weight of butadiene, from about 0% to about 40% by weight of acrylonitrile or styrene and from about 0.4% to about 10% by weight of carboxyl groups, based upon the total weight of polymer.

The carboxyl-terminated liquid polymers can be esterified or acrylated by methods well known in the art. Reference is here made to Col. 5 of the Messerly U.S. Pat. 4,018,847 which generally describes esterification and acrylation of carboxyl-terminated polymers as well as the amine-terminated liquid polymers themselves. This patent is incorporated in its entirety hereinto by reference to render complete disclosure of amine-terminated liquid polymers and their preparation.

Amines which react well with the carboxyl-terminated, ester-terminated and acyl-terminated polymers described heretofore include aliphatic amines containing from 1 to 20 carbon atoms, more preferably from 1 to 12 carbon atoms, and at least two, more preferably two, primary and/or secondary amine groups. Also suitable are alicyclic amines containing from 4 to 20 carbon atoms, more preferably from 4 to 12 carbon atoms, and at least two, more preferably two, primary and/or secondary amine groups. Heterocyclic amines may also be used which contain from 2 to 20 carbon atoms, more preferably from 2 to 12 carbon atoms, and at least two, more preferably two, primary and/or secondary amine groups. Examples of suitable amines just described include aliphatic amines such as ethylenediamine, 1,2-propanediamine, 1,3-propanediamine, 1,4-butanediamine, 2-methyl-1,2-propanediamine, 1,5-pentanediamine, 1,6-hexanediamine, 1,7-heptanediamine, 1,8-octanediamine, 1,10-decanediamine, 1,12-dodecanediamine, and the like; aliphatic polyamines such as diethylenetriamine, triethylenetetraamine, tetraethylenepentamine, bis(hexamethylene)triamine, 3,3'-iminobispropylamine, and the like; alicyclic diamines and polyamines such as 1,2-diaminocyclohexane, 1,8-p-methanediamine, and the like; and heterocyclic diamines and polyamines such as 4-(aminomethyl)piperidine; piperazines such as N-(aminoalkyl)piperazines wherein each alkyl group contains from 1 to 12 carbon atoms, more preferably 1 to 6 carbon atoms, such as N-(2-aminoethyl)piperazine, N-(3-aminopropyl)-piperazine, N,N'-bis(3aminopropyl)piperazine, and the like.

More preferably, the amines just described contain at least two primary and/or secondary amine groups having different reactivities. The presence of amine groups having different reactivities makes the amine-terminated reaction more likely than the coupling of the liquid polymers, and a smaller amine excess may be

used in order to avoid coupling. Examples of more preferred amines include some alicyclic amines such as 1,8-p-methanediamine, and the like; and some heterocyclic amines such as 4-(aminomethyl) piperidine and N-(aminoalkyl)piperazines wherein the alkyl group contains from 1 to 12 carbon atoms, more preferably 1 to 6 carbon atoms, such as N-(2-aminoethyl)piperazine, N-(3-aminopropyl)-piperazine, and the like. Excellent results were obtained using N-(2-aminoethyl)piperazine.

Aromatic diamines and polyamines can be used to produce amine-terminated polymers. The high temperature required for aromatic amine reaction with carboxyl-terminated polymers causes excessive degradation of reactants and products and is therefore much less preferred. However, aromatic amines react well with the acyl-terminated polymers described heretofore. Suitable aromatic amines contain at least two primary or secondary amine groups bonded directly to at least one aromatic nucleus. Examples of suitable aromatic amines include 4,5-acenaphthenediamine, 3,5-diaminoacridine, 1,4-diaminoanthraquinone, 3,5-diaminobenzoic acid, 2,7-fluoroenediamine, 1,5-naphthalenediamine, 1,8-naphthalenediamine, 2,4-toluenediamine, 2,6-toluenediamine, o-phenylenediamine, m-phenylenediamine, p-phenylenediamine, and the like.

A solvent is not required for the amine-termination reaction but may be used. Mixtures of solvents may also be used. Suitable solvents include aliphatic and cycloaliphatic ethers containing from 3 to 10 carbon atoms, more preferably from 3 to 6 carbon atoms, such as tetrahydrofuran, diethylether, and the like; halogenated aliphatic hydrocarbons containing from 1 to 10 carbon atoms, more preferably from 1 to 6 carbon atoms, such as chloroform, carbon tetrachloride, 1,2-dichloroethylene, trichloroethylene, tetrachloroethylene, and the like; and esters containing from 3 to 10 carbon atoms, more preferably from 3 to 6 carbon atoms, such as ethyl acetate, n-butyl acetate, hexyl acetate, benzyl acetate, methyl

propionate, ethyl propionate, and the like. Also suitable as solvents and more preferred are aromatic compounds such as benzene, chlorobenzene, toluene, o-, m- and p-xylene, o-, m- and p-diethylbenzene, cumene, mesitylene, and the like.

A sufficient quantity of at least one amine described heretofore may be reacted with a carboxyl-terminated, ester-terminated or acid-chloride-terminated liquid polymer described heretofore in order to produce an amine-terminated liquid polymer containing from about 1.7 to about 3 primary and/or secondary amine groups per molecule. Typically, the average number of total carboxyl, ester or acid chloride groups in a liquid polymer before reaction will be from about 1.7 to about 3 groups per molecule, more preferably from about 1.7 to about 2.3 groups per molecule. In this typical case, from about 1.2 to about 6 mole equivalents, and more preferably from about 1.2 to about 3 mole equivalents, of at least one amine described heretofore can be used per mole equivalent of carboxylated, esterified or acylated liquid polymer described heretofore. However, when the carboxylated, esterified or acylated liquid polymer also contains polymerized therein appreciable amounts of acrylic acid, acrylates, or the like, the amount of amine reacted should be limited so that the amine-terminated liquid polymer contains no more than an average of about 1.7 to about 3 primary and/or secondary amine groups per molecule.

No catalyst is required, and many types of mixing apparatus can be used in the amine termination reaction. For example, simple mixers can be used, including turbine stirrers as well as propeller mixers. Reaction components can be combined in any order. The reaction mixture may be heated or refluxed if a solvent is used, at a temperature from about 80° to about 150°C, typically for about 1 to 6 hours. The amine-terminated liquid polymer may be purified by vacuum distillation or by washing with a solvent, such as a benzenemethanol

mixture, followed by drying the polymer. Amine content of the amine-terminated liquid polymers can be analyzed quantitatively by infrared spectroscopy. Amine content can also be analyzed quantitatively following the procedure described by Siggia, Quantitative Organic Analysis via Functional Groups, N.Y., Wiley and Sons, Inc., 1963, pp. 452-456.

Epoxy resins suitable for use in this invention, together with amine-terminated liquid polymers, contain at least an average of about 1.7 epoxy groups per molecule, more preferably from about 1.7 to about 4 epoxy groups per molecule, and even more preferably from about 1.7 to about 2.3 epoxy groups per molecule. The epoxy resins may be liquids or low-melting solids but are preferably liquids having a bulk viscosity from about 200 centipoises to about 2,000,000 centipoises, measured using a Brookfield RVT viscometer at 25°C. The epoxy resins can have an epoxy equivalent weight, i.e., gram molecular weight per epoxy group, from about 70 to about 6,000, more preferably from about 70 to about 2,000. Non-cycloaliphatic epoxy resins are preferred and include epoxidized cyclic silane, epoxidized soybean oil, polyglycidyl esters of polycarboxylic acid, epoxidized polyolefins, and glycidyl ether resins, with glycidyl ether resins being more preferred. A non-cycloaliphatic epoxy resin may be defined as a resin in which an epoxy group is not itself part of a cycloaliphatic ring structure. Examples of suitable polyglycidyl esters of polycarboxylic acids include the diglycidyl ester of linoleic dimer acid, the triglycidyl ester of linoleic trimer acid, and the like. Suitable glycidyl ether resins include polyallyl glycidyl ether, the diglycidyl ether of chlorendic diol, the diglycidyl ether of dioxanediol, the diglycidyl ether of endomethylene cyclohexanediol, epoxy novolac resins, alkanediol diglycidyl ethers, alkanetriol triglycidyl ethers, and the like.

More preferred glycidyl ether resins include alkanediol diglycidyl ethers having the formula

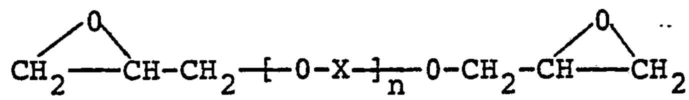

wherein X is an alkylene or alkylidene group containing from 1 to 10 carbon atoms, more preferably from 2 to 6 carbon atoms, and n is from 1 to 25, more preferably from 1 to 15. Suitable alkanediol diglycidyl ethers include ethylene glycol diglycidyl ether, propylene glycol diglycidyl ether, butanediol diglycidyl ether, and the like.

Other more preferred glycidyl ether resins include alkanetriol triglycidyl ethers wherein the alkane group contains from 2 to 10 carbon atoms, more preferably from 3 to 6 carbon atoms, such as glyceryl triglycidyl ether, the triglycidyl ether of trimethylolpropane, and the like. Another more preferred class of glycidyl ether resins is the di- and polyglycidyl ethers of bisphenols, the bisphenols having the formula

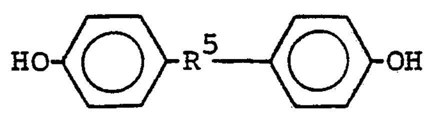

wherein $R^5$ is a bivalent radical containing 1 to 8 atoms of C, O, S and/or N, more preferably an alkylene or alkylidene groups containing 1 to 8 carbon atoms, and even more preferably an alkylene or alkylidene groups containing 1 to 6 carbon atoms. Examples of suitable bisphenols include methylene bisphenol, isopropylidene bisphenol, butylidene bisphenol, octylidene bisphenol, bisphenol sulfide, bisphenol ether, bisphenol amine, and the like. Excellent results were obtained using isopropylidene bisphenol.

Cycloaliphatic epoxy resins are less preferred in the compositions of this invention because they tend to produce brittle coatings and may be less reactive than non-cycloaliphatic epoxy resins. By cycloaliphatic

epoxy resin is meant a resin in which an epoxy group is itself part of a cycloaliphatic ring structure. Such cycloaliphatic resins include bis(2,3-epoxycyclopentyl)-ether, dicyclopentadiene dioxide, the bis(epoxydicylclo-pentyl)ether of ethylene glycol, 3,4-epoxycyclohexylmethyl-(3,4-epoxy)-cyclohexane carboxylate, bis(3,4-epoxy-6-methylcyclohexylmethyl)adipate, and the like. Other cycloaliphatic resins are described in Lee et al, Handbook of Epoxy Resins, McGraw-Hill Book Company, N.Y., 1967, Chapter 4.

When properly prepared, foamed products of this invention exhibit flexibility and can be elastic when compounded with larger amounts of liquid polymers or they can be rigid but flexible with high impact strength with smaller amounts thereof, i.e., on the order of 5%.

Examples set forth below are presented for the purpose of illustrating the invention claimed herein and are not intended to limit the scope of the invention in any manner.

## EXAMPLE 1

The ingredients used to prepare the foamed composition of matter of this invention are given below in parts by weight, unless otherwise indicated.

| Ingredient | Amount | |
|---|---|---|
| amine terminated liquid polymer | 52.4 | (A) |
| silicone surfactant | (0.9 phr) | (A) |
| Titanium dioxide pigment | 10 | (A) |
| viscosity control agent | 5 | (A) |
| antioxidant | (0.5 phr) | (A) |
| ultraviolet light absorber | (0.5 phr) | (A) |
| blowing agent paste | 3 | (A) |
| epoxy resin | 25.5 | (B) |
| bis-phenol A | 5.1 | (B) |

The amine-terminated liquid polymer used was Hycar ATBN 1300X16 resin which is a copolymer of butadiene and

acrylonitrile containing 16% by weight of acrylonitrile. Its Brookfield viscosity at 27°C. is about 225,000 cps, total equivalent weight of 800 to 1000 and specific gravity at 25°C. of 0.956. The silicone surfactant was Dow Corning's DC 200 which is a water-clear silicone fluid having a viscosity of about 100 centistokes, measured at 25°C. This surfactant promotes formation of uniform cellular structure. Viscosity control agent was 2,2,4-trimethyl-1,3-pentanediol diisobutyrate, identified as Kodaflex® TXIB. The antioxidant was Goodrite 3125 from BFGoodrich. It is a chemically pure, tri-functional phenol in finely divided crystalline form which has the function of stabilizing against long term, high temperature degradation. The UV light absorber was Tinuvin 328 from Ciba-Geigy which is a family of substituted benzotriazoles. The blowing agent employed was benzenesulfonyl hydrazide in paraffin oil in relative weight ratio of 3/1. Shell's Epon 828 resin was the epoxy resin, more specifically identified as a light colored, epichlorohydrin/bisphenol A-type, low molecular weight epoxy resin. Viscosity of this epoxy resin was about 100 to 160 poises measured at 25°C, more specifically defined as kinematic viscosity (MS 170); and its gram equivalent weight is 185-192 grams.

The foamed composition was prepared by stirring and heating components (A) to about 95°C and adding blowing agent paste while stirring for about thirty seconds. Components (B) were premixed and preheated to about 95°C before being added to the (A) mix with agitation for about thirty seconds. The reaction product mix of components (A) and (B) was then poured into a preheated mold coated with Frekote 33 lubricant and cured in an oven at 130°C in about one-half hour.

The resulting cellular product had a density of 17.7 $lbs/ft^3$, Shore A hardness of 36, compression set of 55% after deflection for 22 hours, and 25% compression deflection at of 18 psi load. This product was soft and rubbery. Addition of bisphenol A was made to increase

hardness of the resulting product.

Example 2

Another sample of a cellular product was prepared from ingredients set forth below in parts by weight, unless otherwise indicated:

| Ingredient | Amount | |
|---|---|---|
| amine terminated liquid polymer | 49.7 | (C) |
| triethylene tetraamine | 2.0 | (C) |
| silicone surfactant | 1.0 | (C) |
| calcium carbonate | (2.77 phr) | (C) |
| blowing agent paste | 3.1 | |
| methylene chloride | 7.8 | |
| Epon® 828 epoxy resin | 27.8 | (D) |
| epoxy novolac resin | 7.3 | (D) |
| Ciba-Geigy epoxy resin | 2.3 | (D) |

The liquid polymer in this example was Hycar 1300X21, an amine terminated liquid polymer with a Brookfield viscosity at 27°C of 160,000 cps, total equivalent weight of 1100-1300 and acrylonitrile content of 10%. DC196 silicone surfactant was used which is sold by Dow Chemical and which is a liquid silicone glycol copolymer with a specific gravity at 25°C of 1.03, viscosity at 25°C of 2000 cst and a flash point of 107°C. Same blowing agent paste and Epon 828 epoxy resin were used as in Example 1. Epoxy novolac resin used here was Dow's DEN 438 semi-solid resin which combines in one molecule the thermal stability of a phenolic backbone with the reactivity and versatility of an epoxy. This resin has an average of 3.6 epoxy groups per molecule and an average molecular weight of about 550. Epoxy novolac and Ciba-Geigy epoxy resins were used in conjunction with the Epon 828 epoxy resin to obtain foam of lower density.

The foamed product was prepared by agitating while heating components (C) to about 95°C. A dispersion

of the blowing agent paste was prepared with methylene chloride and added slowly to the component (C) mix with stirring for about one-half minute to prevent excessive frothing. Methylene chloride was used in conjunction with the blowing agent to obtain more foaming. Components (D) were premixed and preheated to about 95°C and then added to component (C) mix with agitation for about fifteen seconds. After the mold was preheated and coated with Frekote 33 lubricant, the reaction mix of the ingredients was poured into the mold and cured in about one-half hour at about 105°C.

Foamed product, prepared as described in this example, had a density of 11.2 lbs/$ft^3$ and Shore A hardness of 35. This product had lower density than the product in the preceding example.

## CLAIMS

1. Cellular composition of matter comprising a reaction product of at least one epoxy resin and at least one amine terminated reactive liquid polymer, the cellular structure having been formed by the presence of a sufficient amount of at least one organic blowing agent which thermally decomposes or can be made to thermally decompose at a temperature of about 80 to 120°C to release nitrogen gas.

2. Composition of matter of Claim 1 wherein the epoxy resin(s) is a non-cycloaliphatic epoxy resin, the liquid polymer(s) has Brookfield viscosity of about 500 to 2,500,000 cps, the relative amounts of the main components being from about 2 to about 500 parts by weight of the liquid polymer(s) and from about 0.1 to 20 parts by weight of the blowing agent(s) per 100 parts by weight of the epoxy resin(s).

3. Composition of matter of Claim 2 wherein the liquid polymer(s) contains an average of about 1.7 to about 3 amine groups per molecule, said groups being primary, secondary or a mixture thereof, said liquid polymer(s) has the formula

$$Y-\overset{O}{\overset{\|}{C}}-\left(B\right)-\overset{O}{\overset{\|}{C}}-Y$$

wherein Y is a univalent radical obtained by removing hydrogen from an amine group of an aliphatic, alicyclic, heterocyclic or aromatic amine containing from 2 to 20 carbon atoms and at least two amine groups, at least two of said amine groups being primary, secondary or a mixture thereof, and B is a polymeric backbone comprising carbon-carbon linkages and containing polymerized units of at least one vinylidene monomer having at least one terminal $CH_2=C<$ group, said monomer being selected from the group consisting of (a) monoolefins containing 2 to 14 carbon atoms, (b) dienes containing 4 to 10 carbon atoms, (c) vinyl and allyl esters of carboxylic acids containing 2 to

8 carbon atoms, (d) vinyl and allyl ethers of alkyl radicals containing 1 to 8 carbon atoms, and (e) acrylic acids and acrylates having the formula

$$CH_2=\overset{R}{\overset{|}{C}}-\overset{O}{\overset{\|}{C}}-O-R^1$$

said R being hydrogen or an alkyl radical containing 1 to 3 carbon atoms and said $R^1$ being hydrogen, an alkyl radical containing 1 to 18 carbon atoms, or an alkoxyalkyl, alkylthioalkyl or cyanoalkyl radical containing 2 to 12 carbon atoms; the non-cycloaliphatic epoxy resin contains an average of about 1.7 to 4 epoxy groups per molecule and has an epoxy equivalent weight of about 70 to 6,000; the blowing agent(s) is selected from the group consisting of sulfonyl hydrazides, azo compounds, nitroso compounds, and mixtures thereof; relative amounts of the main components being from about 5 to 400 parts of the liquid polymer(s) and from about 1 to 5 parts of the blowing agent(s) per 100 parts of the epoxy resin(s).

4. Composition of matter of Claim 3 wherein said carbon-carbon linkages in the liquid polymer(s) comprise at least 90% of the total polymeric backbone weight, and said monomer is selected from the group consisting of (a) monoolefins containing 2 to 8 carbon atoms, (b) dienes containing 4 to 8 carbon atoms, (c) acrylic acids and acrylates having the formula

$$CH_2=\overset{R}{\overset{|}{C}}-\overset{O}{\overset{\|}{C}}-O-R^1$$

where R is hydrogen or an alkyl radical containing 1 to 3 carbon atoms and $R^1$ is hydrogen, alkyl radical containing 1 to 8 carbon atoms, or an alkoxyalkyl, alkylthioalkyl or cyanoalkyl radical containing 2 to 8 carbon atoms, and mixtures of such monomers; the epoxy resin has an epoxy equivalent weight from about 70 to about 2,000 and is selected from glycidyl ether resins; and the blowing agent is selected from the group consisting of hydrazides of

organic sulfonic acids; azo compounds of aminobenzene, cyclohexylnitriles, and aliphatic amides and aliphatic nitriles containing 1 to 10 carbon atoms; nitroso compounds of dicarboxylic acid amides; and mixtures of the above blowing agents.

5. Composition of matter of Claim 4 wherein the epoxy resin is selected from the group consisting of (1) alkanediol diglycidyl ethers having the formula

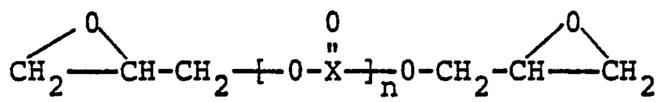

wherein X is an alkylene or alkylidene group containing from 1 to 10 carbon atoms, and n is from 1 to 25, (2) di- and polyglycidyl ethers of bisphenols, said bisphenols having the formula

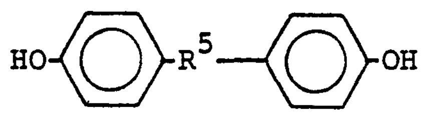

wherein $R^5$ is a bivalent radical containing from 1 to 8 atoms of at least one atom selected from the group consisting of C, O, S and N, and (3) alkanetriol triglycidyl ethers wherein the alkane group contains from 2 to 10 carbon atoms.

6. Composition of matter of Claim 5 wherein said vinylidene monomer contains copolymerized therewith from 0% up to about 50% by weight of at least one comonomer selected from the group consisting of (f) vinyl aromatics having the formula

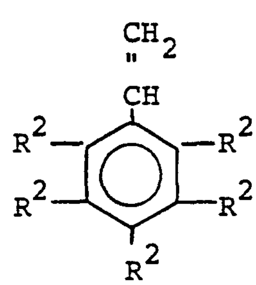

wherein $R^2$ is individually selected from hydrogen, halogens or alkyl radicals containing from 1 to 4 carbon atoms, (g) vinyl nitriles having the formula

$$CH_2{=}\overset{R^3}{\overset{|}{C}}{-}C{\equiv}N$$

wherein $R^3$ is hydrogen or an alkyl radical containing 1 to 3 carbon atoms, (h) vinyl halides, (i) divinyls and diacrylates, (j) amides of α,β-olefinically unsaturated carboxylic acids containing 2 to 8 carbon atoms, and (k) allyl alcohol.

7. Composition of matter of Claim 6 wherein said amine groups have different reactivities, and said comonomer is selected from the group consisting of (f) said vinyl aromatics and (g) said vinyl nitriles; said blowing agent is selected from the group consisting of hydrazides of benzene sulfonic dicarboxylic acids.

8. Composition of matter of Claim 7 wherein said epoxy resin is a diglycidyl ether of isopropylidene bisphenol; said amine is at least one N-(aminoalkyl) piperazine, the aminoalkyl group of said amine contains from 1 to 12 carbon atoms, said vinylidene monomer is at least one of said dienes, and said comonomer is at least one of said vinyl nitriles; and the blowing agent is selected from azo-bis-isobutyronitrile, diazoaminobenzene, azocyclohexylnitrile, N,N'-dimethyl-N,N'-dinitrosoterephthalamide, benzenesulfonyl hydrazide, benzene-1,3-disulfonyl hydrazide, and p-toluenesulfonyl hydrazide.

9. Composition of matter of Claim 8 wherein said diene is butadiene and said vinyl nitrile is acrylonitrile.

10. Composition of matter of Claim 6 wherein the blowing agent is selected from the group consisting of benzenesulfonyl hydrazide, p-toluenesulfonyl hydrazide, N,N'-dimethyl-N,N'-dinitrosoterephthalamide, and mixtures thereof.

0030668

European Patent Office

# EUROPEAN SEARCH REPORT

Application number
EP 80 10 7479.0

## DOCUMENTS CONSIDERED TO BE RELEVANT

| Category | Citation of document with indication, where appropriate, of relevant passages | Relevant to claim |
|---|---|---|
| | US - A - 4 055 541 (RIEW) * claims 1, 2, 3, 6, 7, 8, 12 * | 1,3,4, 5,6,7, 9 |
| | -- | |
| | US - A - 4 031 043 (SCHMITTER et al.) * claims 1, 2, 3, 10 * | 1,8 |
| | -- | |
| | US - A - 2 936 294 (KOHRN) * claims 1, 2 * | 1,8 |
| | -- | |
| A | US - A - 4 157 429 (HERGENROTHER et al.) * abstract; claim 9; column 3, lines 42 to 45 * | 1,8 |
| | -- | |
| A | GB - A - 1 381 123 (SHELL) * claim 1 * | 1 |
| | -- | |
| A | DE - B - 1 301 134 (TELEFUNKEN) * claim * | 1,8 |
| | ---- | |

**CLASSIFICATION OF THE APPLICATION (Int. Cl.³)**

C 08 G 59/50
C 08 G 59/54
C 08 L 63/00
C 08 J 9/10

**TECHNICAL FIELDS SEARCHED (Int. Cl.³)**

C 08 G 59/00
C. 08 G 81/00
C 08 J 9/00
C 08 L 63/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 13-03-1981 | MARX |